# EUROPÄISCHE PATENTANMELDUNG

(11) **EP 0 754 581 A1**
(43) Veröffentlichungstag der Anmeldung: **22.01.1997**
(21) Anmeldenummer: 96110647.3
(22) Anmeldetag: 02.07.1996
(51) Int. Cl.: B60J 1/18

(54) **Faltverdeck für Fahrzeuge mit mindestens einer im Verdeckstoff angeordneten, auswechselbaren Scheibe**

(30) Priorität: 19.07.1995 DE 19526283
(71) Anmelder: PARAT-WERK SCHÖNENBACH GmbH + Co KG, D-42897 Remscheid (DE)
(72) Erfinder: Seibold, Josef, 94089 Neureichenau (DE); Schönenbach, Heinrich, 42897 Remscheid-Lennep (DE)
(74) Vertreter: Patentanwälte Ostriga & Sonnet

(57) **Zusammenfassung**

Dargestellt und beschrieben ist ein Faltverdeck für Fahrzeuge mit mindestens einer im Verdeckstoff angeordneten, auswechselbaren Scheibe (11), insbesondere aus Hartglas, mit einem am Verdeckstoff (12) angeordneten Tragrahmen sowie einem Scheibenrahmen (13).

Aufgabe der Erfindung ist es ein neues Faltverdeck mit einer auswechselbaren, insbesondere Hartglasscheibe (11) zu schaffen, bei der die Scheibe auf einfache Weise auch vom Nichtfachmann auszuwechseln ist und darüber hinaus einen größeren Diebstahlschutz gewährleistet.

Die Lösung dieser Aufgabe ergibt sich dadurch, daß der Scheibenrahmen (13) als zumindest abschnittweise umlaufendes, fest an der Scheibe (11) angeordnetes Rahmenprofil ausgebildet ist, welches die Scheibe innen- und außenseitig einfaßt und daß der Scheibenrahmen wenigstens mittelbar mit dem Verdeckstoff (12) verbunden ist.

## Beschreibung

Die Erfindung betrifft ein Faltverdeck für Fahrzeuge mit mindestens einer im Verdeckstoff angeordneten, auswechselbaren Scheibe, insbesondere aus Hartglas, mit einem am Verdeckstoff angeordneten Tragrahmen sowie einem Scheibenrahmen.

Ein derartiges Faltverdeck ist beispielsweise aus der DE-OS 41 29 492 bekannt, in der eine "Befestigung eines Fensters in einer flexiblen Bespannung eines Faltverdecks" dargestellt und beschrieben ist. Bei dieser Lösung ist zur Stabilisierung des Verdeckstoffes im Bereich der Fensteröffnung ein umlaufendes Tragrahmenprofil am Verdeckstoff befestigt, während ein Scheibenrahmenprofil über ein Kleberstrang an der Innenseite der Heckscheibe angeordnet ist. Die Verbindung zwischen beiden Rahmenprofilen erfolgt über eine Mehrzahl von Schrauben. Diese Lösung hat den Nachteil, daß für den Fall der Notwendigkeit des Austausches der Heckscheibe handwerkliche Fähigkeiten und Kenntnisse eines Fachmanns notwendig sind, die neue Heckscheibe über einen Kleberstrang so mit dem Scheibenrahmen zu verbinden, daß auch über längere Zeit eine völlige Gas-, Wasser- und Druckdichtigkeit gegeben ist. Falls diese Klebearbeiten nun tatsächlich nicht sorgfältig durchgeführt werden, kann Wasser über die Trennfuge zwischen dem Verdeckstoff und der Scheibe in den Innenraum des Fahrzeuges eindringen.

Darüber hinaus ist ein druckschriftlich nicht belegbarer Stand der Technik bekannt, bei dem zunächst der Randbereich des Verdeckstoffes nahe der einzubauenden Scheibe umgeschlagen wird und darin ein umlaufender Metallrahmen umhüllt angeordnet wird. Die Verbindung zwischen dem umhüllten Metallrahmen und der einzubauenden Scheibe erfolgt über ein H-förmiges Dichtprofil aus Gummi, welches einseitig die Hartglasscheibe und auf der anderen Seite den umhüllten Metallrahmen umgreift. Bei dieser Art der Befestigung einer Hartglasscheibe in einem Verdeck eines Fahrzeugs besteht zwar auch die Möglichkeit, bei der Beschädigung der Scheibe diese auszuwechseln, Jedoch hat diese Anordnung ebenfalls den Nachteil, daß größeres handwerkliches Geschick sowie einige technische Hilfsmittel notwendig sind um die Scheibe umlaufend in die Dichtung einzuführen.

Darüber hinaus ist bei dieser Art der Befestigung nachteilig, daß es nach dem außenseitigen Abtrennen des einen Dichtungsschenkels im Bereich der Hartglasscheibe auf einfache Weise möglich ist, die Hartglasscheibe aus der Befestigung herauszunehmen, so daß diese Lösung aus Diebstahlschutzgründen problematisch ist.

Ausgehend von dem zuerst beschriebenen Stand der Technik besteht daher die Aufgabe der Erfindung darin ein neues Faltverdeck mit einer auswechselbaren, insbesondere Hartglasscheibe zu schaffen, bei der die Scheibe auf einfache Weise auch vom Nichtfachmann auszuwechseln ist und darüber hinaus einen größeren Diebstahlschutz gewährleistet.

Die Lösung dieser Aufgabe ergibt sich aus den Merkmalen des Anspruchs 1, insbesondere den Merkmalen des Kennzeichenteils, wonach der Scheibenrahmen als zumindest abschnittweise umlaufendes, fest an der Scheibe angeordnetes Rahmenprofil ausgebildet ist, welches die Scheibe innen- und außenseitig einfaßt und daß das Rahmenprofil wenigstens mittelbar mit dem Verdeckstoff verbunden ist.

Die erfindungsgemäße Lösung hat zum einen den grundsätzlichen Vorteil, daß hierbei die Hartglasscheibe auch vom Nichtfachmann auf einfache Weise aus dem Faltverdeck zu lösen und wieder zu befestigen ist. Darüber hinaus sind die Befestigungen innenseitig angeordnet, so daß ein größerer Diebstahlschutz gewährleistet ist. Die erfindungsgemäßen Vorteile ergeben sich insbesondere dadurch, daß nunmehr die Hartglasscheibe von vornherein randlich umlaufend von einem Rahmenprofil fest umschlossen ist, der beim Austausch einer beispielsweise beschädigten Scheibe mit ausgewechselt wird. Dies bedeutet, daß die Baueinheit Scheibe/Rahmenprofil beim Auswechseln einer Scheibe lediglich vom Verdeckstoff gelöst und dann wieder am Verdeckstoff befestigt werden muß.

Bei einer vorteilhaften Ausführungsform der Erfindung weist das Rahmenprofil einen von der Scheibe wegweisenden Basisbereich und zwei beabstandet angeformte Schenkel auf, zwischen denen die Scheibe befestigt ist, und der Basisbereich ist wenigstens mittelbar mit dem Verdeckstoff verbunden. Hierbei wird auf vorteilhafte Weise die Scheibe zwischen den Schenkeln gehalten, während das Basisteil Raum für Befestigungsmöglichkeiten schafft.

Bei einer weiteren vorteilhaften Ausführungsform der Erfindung wird der Tragrahmen von einer umlaufenden, zumindest teilweise vom Verdeckstoff umhüllten Leiste gebildet, wobei der Tragrahmen und der Scheibenrahmen sowie der teilweise dazwischen angeordnete Verdeckstoff lösbar aneinander befestigt sind.

Hierbei ist beim Auswechseln einer Scheibe lediglich das Entfernen bzw. Montieren einer Mehrzahl von Befestigungselementen zwischen dem Tragrahmen und dem Scheibenrahmen notwendig.

Bei einer bevorzugten Ausführungsform der Erfindung weist der Tragrahmen ein am Verdeckstoff fest angeordnetes Anschlußprofil auf, das mit einer umlaufenden Verdickung versehen ist, welche von einem U-förmigen Klemmprofil umgriffen wird, wobei das Anschlußprofil und das Klemmprofil miteinander unlösbar verbunden und daß das Klemmprofil und das Basisteil des Scheibenrahmens lösbar aneinander befestigt sind.

Eine besonders bevorzugte Ausführungsform der Erfindung weist ein einstückig ausgebildeten Tragrahmen und Scheibenrahmen auf, wobei die Verbindung von Scheibenrahmen und Verdeckstoff über einen teilweise am Verdeckstoff und teilweise am Scheibenrahmen befestigten Reißverschluß erfolgt. Hierbei weist die auszuwechselnde Hartglasscheibe jeweils nicht nur einen Scheibenrahmen, sondern zusätzlich ein einstückig formschlüssig daran angeordnetes Tragrahmenprofil sowie ein Trägerband eines Reißverschlusses auf. Dagegen ist das andere Trägerband des Reißverschlusses fest am Verdeckstoff innen befestigt. Beim Auswechseln der Hartglasscheibe muß daher lediglich eine Klebeverbindung zwischen dem Verdeckstoff und dem Tragrahmenprofil gelöst und danach wieder befestigt sowie der Reißverschluß umlaufend geöffnet bzw. geschlossen werden.

Letztlich ist eine weitere Ausführungsform der Erfindung dadurch gekennzeichnet, daß der Scheibenrahmen als fest an der Scheibe angeordnetes, umlaufendes Dichtungsprofil ausgebildet ist, welches die Scheibe innen- und außenseitig einfaßt, und daß das Dichtungsprofil über eine U-förmige Verlängerung eines Tragrahmens mittelbar mit dem Verdeckstoff verbunden ist.

Diese erfindungsgemäße Lösung hat den Vorteil, daß auch hierbei eine Baueinheit aus Scheibe und umlaufendem Dichtungsprofil jederzeit auf einfache Weise auswechselbar ist, wobei der Tragrahmen einschließlich der U-förmigen Verlängerung fest am Verdeckstoff angeordnet ist.

Bei dieser Lösung ist die U-förmige Verlängerung über Schrauben am Dichtungsprofil lösbar befestigt, während der innenseitige Schenkel der U-förmigen Verlängerung einige beabstandete, quer zur Verlaufsrichtung der U-förmigen Verlängerung angeordnete Schlitze aufweist, die nach dem Einbau der Scheibe in das U-Profil mittels Spannschrauben verschließbar sind. Durch diese Art der Befestigung der Baueinheit Scheibe/Dichtungsprofil am Tragrahmen wird einerseits der feste Sitz der Baueinheit im Verdeck und andererseits die leichte Austauschbarkeit gewährleistet.

Weitere Vorteile der Erfindung ergeben sich aus der nachfolgenden Beschreibung einiger Ausführungsbeispiele. Es zeigen:
Fig. 1 eine Befestigungsvorrichtung für eine Scheibe in einem Faltverdeck im Teilquerschnitt,
Fig. 2 eine weitere Befestigungsvorrichtung für eine Scheibe in einem Faltverdeck im Teilquerschnitt,
Fig. 3 eine weitere Befestigungsvorrichtung für eine Scheibe in einem Faltverdeck im Teilquerschnitt,
Fig. 4 eine weitere Befestigungsvorrichtung für eine Scheibe in einem Faltverdeck im Teilquerschnitt,
Fig. 5 eine Innenansicht einer Befestigungsvorrichtung gemäß Fig. 4,
Fig. 6 ein vergrößerter Ausschnitt der in Fig. 5 dargestellten Befestigungsvorrichtung und
Fig. 7 einen Querschnitt gemäß Schnittlinie VII-VII in Fig. 6.

In den Zeichnungen sind lösbare Befestigungsvorrichtungen für eine Scheibe in einem Faltverdeck eines Fahrzeugs insgesamt mit der Bezugsziffer 10 bezeichnet.

Derartige Befestigungsvorrichtungen 10 dienen zur Anordnung einer Scheibe 11, insbesondere Hartglasscheibe, innerhalb eines Verdeckstoffes 12 eines Faltverdecks.

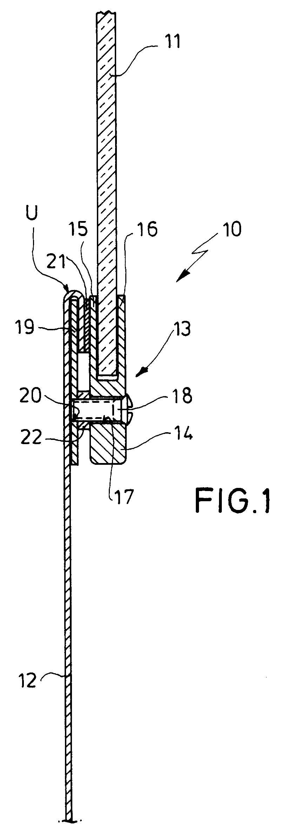

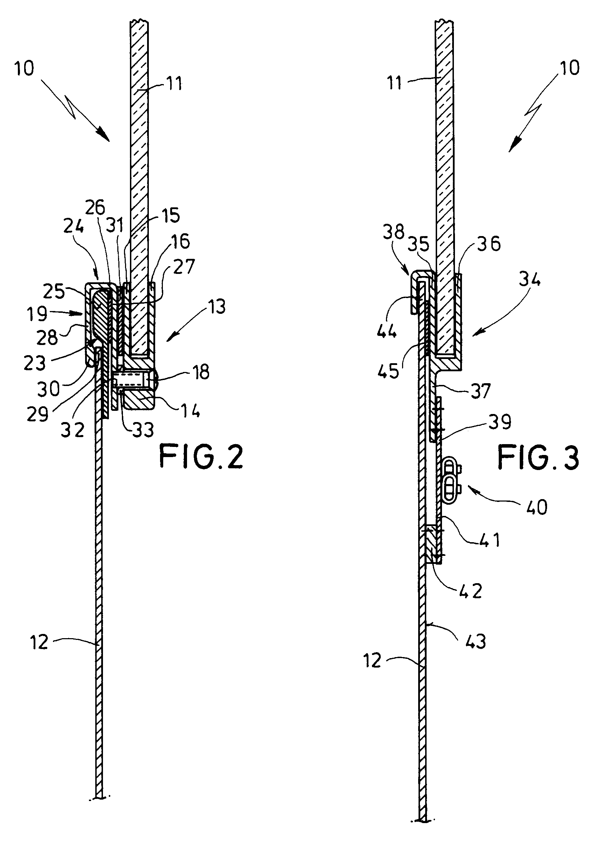

In der Fig. 1 und 2 ist die Scheibe 11 von einem umlaufenden, mit der Scheibe 11 vollflächig verklebten Scheibenrahmen 13 umgeben, der ein Basisteil 14 sowie zwei beabstandete Schenkel 15 und 16 aufweist, zwischen denen die Scheibe 11 gehalten ist. Der Scheibenrahmen 13 weist im Bereich des Basisteils 14 eine Vielzahl von Bohrungen 17 zur Aufnahme von Gewindeschrauben 18 auf.

Der Verdeckstoff 12 ist im Bereich der vorgesehenen bzw. vorhandenen Fensteröffnung umgeschlagen und ein dadurch gebildeter Umbug U umhüllt teilweise eine als Tragrahmen 19 ausgebildete Metall- oder Kunststoffleiste. Der Tragrahmen 19 ist vollflächig mit dem Verdeckstoff 11 verbunden.

Die Befestigung einer Scheibe 11 einschließlich Scheibenrahmen 13 erfolgt nun dadurch, daß die Scheibe 11 innenseitig so in die Fensteröffnung eingesetzt wird, daß die im Basisteil 14 vorhandenen Bohrungen 17 mit entsprechenden, gegenüberliegenden Schraubhülsen 20 im Tragrahmen 19 übereinstimmen. Nicht nur zwischen dem Schenkel 15 des Scheibenrahmens 13 und dem Umbug U am Verdeckstoff 12 ist ein weiteres Dichtband 21 angeordnet, sondern auch im Bereich der miteinander fluchtenden Bohrungen 17 und 20 zwischen dem Basisteil 14 und dem Tragrahmen 19 ein Dichtband 22, welches von den Gewindeschrauben 18 durchgriffen wird.

Durch das Einschrauben der Gewindeschrauben 18 erfolgt eine gas-, wasser- und druckdichte Verbindung zwischen dem Verdeckstoff 12 des Faltverdecks und der Scheibe 11. Durch einfaches Lösen der Befestigungsschrauben 18 und durch Austausch der durch Scheibe 11 und Scheibenrahmen 13 gebildeten Einheit kann ein beschädigtes Fensterelement ausgetauscht werden.

In der Fig. 2 ist eine Ausführungsform dargestellt, bei der der Tragrahmen 19 von einem Anschlußprofil 23 und einem Klemmprofil 24 gebildet wird. Das umlaufend großflächig mit dem Verdeckstoff 12 durch Hochfrequenz-Schweißung verbundene Anschlußprofil 23 ist mit einer Verdickung 25 versehen, welche von dem U-förmigen Klemmprofil 24 umgriffen wird und über ein Dichtband 26 mit einem Schenkel 27 des Klemmprofils 24 verbunden ist. Ein freier Schenkel 28 des Klemmprofils ist von der Fensteröffnung wegweisend angeordnet und übergreift nicht nur die Verdickung 25, sondern auch einen Endbereich 29 des Verdeckstoffes 12. Da auch der freie Schenkel 28 des Klemmprofils 24 mit einer Verdickung 30 versehen ist, ergibt sich eine zusätzliche Klemmbefestigung des Endbereichs 29 des Verdeckstoffes 12 zwischen den beiden Schenkeln 27 und 28 des Klemmprofils 24.

Die Befestigung der Scheibe 11 einschließlich Scheibenrahmen 13 am Tragrahmen 19 erfolgt auf ähnliche Weise wie bereits zu Fig. 1 beschrieben. In diesem Fall ist zwischen dem Schenkel 15 des Scheibenrahmens 13 und dem Schenkel 27 des Klemmprofils 24 ein Dichtband 31 angeordnet. Gegenüberliegend der Bohrung 17 im Basisteil 14 ist darüber hinaus eine Schraubhülse 32 im Schenkel 27 vorhanden, wobei dort zwischen dem Schenkel 27 und dem Basisteil 14 wiederum ein Dichtband 33 angeordnet ist, welches von Gewindeschrauben 18 durchgriffen wird.

In der Fig. 3 eine Ausführungsform dargestellt, bei der die Scheibe 11 ein einstückiges als Scheiben/Tragrahmen dienendes Profil 34 aufweist, welches umlaufend an der Scheibe 11 befestigt ist. Das rahmenartige Profil 34 weist zwei Schenkel 35 und 36 auf, zwischen denen die Scheibe gehalten ist, sowie ein in der Verlängerung des Schenkels 35 angeordnetes Basisteil 37. Darüber hinaus ist der Schenkel 35 an seinem zur Scheibe 11 weisenden Ende U-förmig umgebogen mit einem Tragrahmenbereich 38 versehen.

Des weiteren weist das von der Fensteröffnung wegweisende Basisteil 37 umlaufend ein Trägerband 39 eines Reißverschlusses 40 auf, wobei ein gegenüberliegendes Trägerband 41 des Reißverschlusses 40 über beispielsweise ein Dichtband 42 an einer Innenseite 43 des Verdeckstoffes 12 befestigt ist. Diese Befestigung der Trägerbänder 39 und 41 kann z.B. durch Annähen oder HF-Schweißung erfolgen. Zur Befestigung der Scheibe 11 einschließlich Profil 34 am Verdeckstoff 12 erfolgt zunächst eine Verbindung zwischen dem Rahmen 34 und dem Verdeckstoff 12 mit Hilfe des Reißverschlusses 40, wobei dann ein umlaufender Endbereich 44 des Verdeckstoffes 12 einerseits in den U-förmigen Tragrahmenbereich 38 geschoben wird und andererseits mit Hilfe eines an der Oberseite des Schenkels 35 angeordneten Dichtbandes 45 verklebt wird.

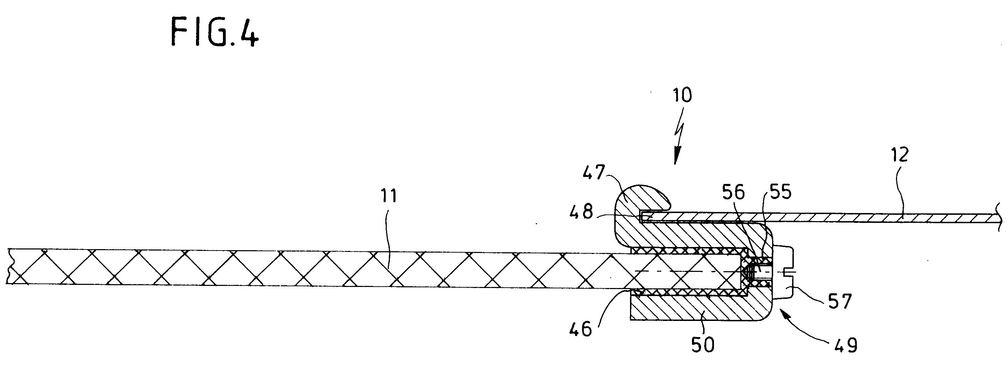

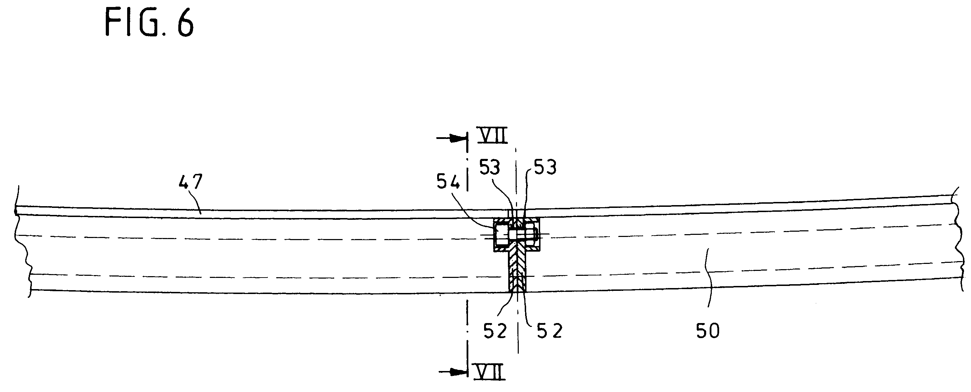

Letztlich zeigen die Figuren 4 bis 7 eine Ausführungsform der Befestigungsvorrichtung 10 zur Anordnung einer Scheibe 11, bei dem der Scheibenrahmen als fest an der Scheibe 11 angeordnetes, umlaufendes Dichtungsprofil 46 ausgebildet ist.

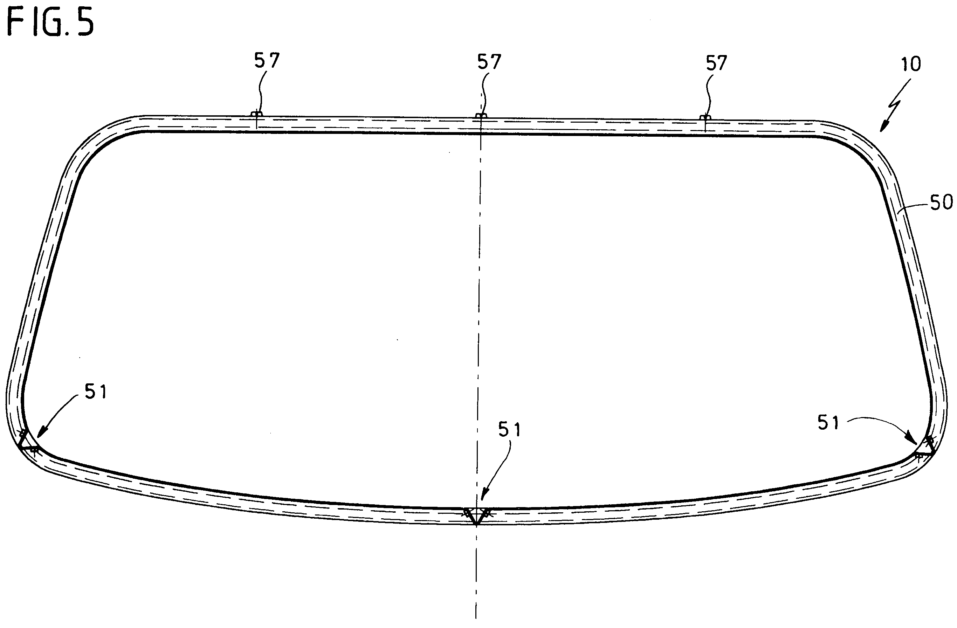

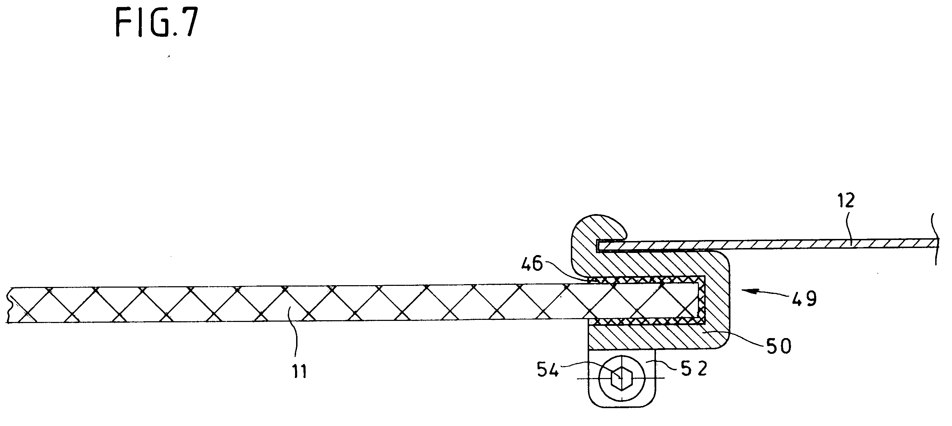

Ein mit dem Verdeckstoff 12 verschweißter Tragrahmen 47, der umlaufend einen Endbereich 48 des Verdeckstoffs 12 übergreift, weist zusätzlich ein stoffschlüssig daran angeordnete, U-förmig umlaufende Verlängerung 49 auf, in die die Einheit aus Scheibe 11 und Dichtungsprofil 46 einsetzbar ist. Die Scheibe 11 einschließlich Dichtungsprofil 46 ist nur deshalb in die durch die U-förmige Verlängerung 49 sich ergebende Scheibeneinfassung einsetzbar, weil ein innenraumseitig vorhandener Schenkel 50 der U-förmigen Verlängerung 49 im Bereich der Scheibenunterkante drei Schlitze 51 (s. Fig. 5) aufweist. Jeder Schlitz 51 ist beidseitig von Metallteilen 52 eingefaßt, welche miteinander fluchtende Bohrungen 53 für eine Spannschraube 54 aufweisen (s. Fig. 7). Letztlich weist das Dichtungsprofil 46 an seiner Oberseite in entsprechende Ausnehmungen der U-förmigen Verlängerung 49 ragende Fortsätze 55 auf, die jeweils mit einer Schraubhülse 56 versehen sind und zur Aufnahme einer stirnseitig in die U-förmige Verlängerung 49 durchdringenden Schraube 57 vorgesehen sind. Diese Schraube 57 dient zur Anordnung der aus der U-förmigen Verlängerung 49 gebildeten Scheibeneinfassung an der aus Scheibe 11 und Dichtungsprofil 46 gebildeten Einheit.

Der Einbau einer Austauschscheibe 11 beginnt damit, daß zunächst die defekte Scheibe 11 entfernt werden muß. Dazu werden die Spannschrauben 54 und die Befestigungsschrauben 57 gelöst und die Einheit aus Scheibe 11 und Dichtungsprofil 46 aus der durch die U-förmige Verlängerung 49 gebildeten Scheibeneinfassung entfernt. Dann wird eine Austauschscheibe 11 samt Dichtungsprofil 46 zunächst in die umlaufende U-förmige Verlängerung 49 eingeschoben. Dies ist dadurch möglich, daß ein gewisser Bewegungsspielraum durch die an der Unterseite innen angeordneten Schlitze 51 gegeben ist. Dann werden an der Oberseite die Schrauben 57 so in das Dichtungsprofil 46 geschraubt, daß eine feste Verbindung zwischen der U-förmigen Verlängerung 49 und dem Dichtungsprofil 46 vorhanden ist. Letztlich können die Schlitze 51 an der Unterseite des Rahmens mittels der Spannschrauben 54 angezogen werden, so daß sich ein fester Sitz der Scheibe 11 innerhalb des Verdecks 12 ergibt.

## Patentansprüche

1. Faltverdeck für Fahrzeuge mit mindestens einer im Verdeckstoff angeordneten, auswechselbaren Scheibe, insbesondere aus Hartglas, mit einem am Verdeckstoff angeordneten Tragrahmen sowie einem Scheibenrahmen dadurch gekennzeichnet, daß der Scheibenrahmen (13) als zumindest abschnittweise umlaufendes, fest an der Scheibe (11) angeordnetes Rahmenprofil ausgebildet ist, welches die Scheibe (11) innen- und außenseitig einfaßt und daß der Scheibenrahmen (13) wenigstens mittelbar mit dem Verdeckstoff (12) verbunden ist.

2. Faltverdeck nach Anspruch 1, dadurch gekennzeichnet, daß der Scheibenrahmen (13) einen von der Scheibe (11) wegweisenden Basisbereich (14) und zwei beabstandet angeformte Schenkel (15 und 16) aufweist, zwischen denen die Scheibe (11) befestigt ist, und daß der Basisbereich (14) wenigstens mittelbar mit dem Verdeckstoff (12) verbunden ist.

3. Faltverdeck nach Anspruch 1 oder 2, dadurch gekennzeichnet, daß der Tragrahmen (19) von einer umlaufenden, zumindest teilweise vom Verdeckstoff (12) umhüllten Leiste gebildet ist und daß der Tragrahmen (19) und der Scheibenrahmen (13) sowie der teilweise dazwischen angeordnete Verdeckstoff (12) lösbar aneinander befestigt sind.

4. Faltverdeck nach Anspruch 1 oder 2, dadurch gekennzeichnet, daß der Tragrahmen (19) ein am Verdeckstoff (12) fest angeordnetes Anschlußprofil (23) aufweist, das mit einer umlaufenden Verdickung (25) versehen ist, welche von einem U-förmigen Klemmprofil (24) umgriffen wird, daß das Anschlußprofil (23) und das Klemmprofil (24) miteinander unlösbar verbunden sind und daß das Klemmprofil (24) und das Basisteil (14) des Scheibenrahmens (13) lösbar aneinander befestigt sind.

5. Faltverdeck nach Anspruch 1, dadurch gekennzeichnet, daß der Tragrahmen und der Scheibenrahmen als einstückiges Profil (34) ausgebildet sind daß die Verbindung vom Profil (34) und Verdeckstoff (12) im wesentlichen über einen teilweise am Verdeckstoff (12) und teilweise am Profil (34) befestigten Reißverschluß (40) erfolgt.

6. Faltverdeck nach Anspruch 5, dadurch gekennzeichnet, daß der Scheibenrahmen als fest an der Scheibe (11) angeordnetes, umlaufendes Dichtungsprofil (46) ausgebildet ist, welches die Scheibe (11) innen- und außenseitig einfaßt, und daß das Dichtungsprofil (46) über eine U-förmige Verlängerung (49) eines Tragrahmens (47) mittelbar mit dem Verdeckstoff (12) verbunden ist.

7. Faltverdeck nach Anspruch 5 oder 6, dadurch gekennzeichnet, daß die U-förmige Verlängerung (49) über Schrauben (57) am Dichtungsprofil (46) lösbar befestigt ist.

8. Faltverdeck nach Anspruch 7, dadurch gekennzeichnet, daß ein innenseitiger Schenkel (50) der U-förmigen Verlängerung (49) einige beabstandete, quer zur Verlaufsrichtung der U-förmigen Verlängerung (49) angeordnete Schlitze (51) aufweist, welche nach dem Einbau der Scheibe (11) in das U-Profil (49) mittels Spannschrauben (54) verschließbar sind.
